# EUROPEAN PATENT APPLICATION

(11) **EP 2 957 420 A1**
(43) Date of publication of application: **23.12.2015**
(21) Application number: 14173157.0
(22) Date of filing: 19.06.2014
(51) Int. Cl.: B29C 67/00, B29C 47/00

(54) **3D printing pen**

(71) Applicant: Lix Pen Ltd., London N1 6FR (GB)
(72) Inventor: Suvorov, Anton, 6060 Gilly (BE); Baran, Ismail, 6030 Marchienne-au-Pont (BE)
(74) Representative: Gevers Patents

(57) **Abstract**

A three-dimensional printing pen (1) comprising a barrel (2) open on a first end (2a) and comprising an opening for receiving a melt-substrate on a second end (2a), opposite to the first end, a nozzle (31) configured to receive and melt said melt-substrate (14, 22) and arranged to be connected to the first open end (2a) of the barrel (2), a channel (16) inside the barrel (2) comprising a first opening adjacent and aligned with the opening in the barrel (2) for receiving said melt-substrate (14, 22) and a second opening, opposite to said first opening, adjacent to the nozzle (31), and a transport mechanism (8, 13, 20) comprising a rotatable transport member (9, 15, 21, 51) which is, in use, in contact with the melt-substrate (14, 22) for moving the melt-substrate (14, 22) through towards the nozzle (31).

## Description

The present invention relates to a three-dimensional (3D) printing pen, and more particular to a 3D printing pen comprising an opening on one end of the pen for receiving a melt-substrate and a nozzle on the opposite end of the pen for extruding melted melt-substrate.

3D printing pens are known. CN 103 35 05 07 discloses a 3D printing pen comprising a housing which receives on one end a melt-substrate. A nozzle is arranged almost fully inside the housing at the other end of the barrel. The nozzle receives the melt-substrate on the inside of the housing, melts the melt-substrate, and releases melted melt-substrate towards the outside. Inside the housing is a transport mechanism for moving the melt-substrate through the pen. The pen has a feed tube between the transport mechanism and the nozzle. The latter is configured to receive the melt-substrate from the transport mechanism. The pen has a heating coil wounded around the nozzle. The heating coil is heating the nozzle and the nozzle is subsequently heating the melt-substrate. The heat is dissipated by providing a fan in the pen. An aluminium element surrounding the feed tube avoids that the melt-substrate is softening in the feed tube. In use, the 3D printing pen is provided with a melt-substrate which is entering the housing through the opening up to the transport mechanism and then subsequently in the feed tube. The pen is switched on and the transport mechanism moves the melt-substrate from the opening to the nozzle by means of a gear being in contact with the melt-substrate. When the latter reaches the nozzle, the heating element melts the melt-substrate to be extrude at the exit of the nozzle as melted melt-substrate. Moving the 3D printing pen with a suitable speed enables a user to create 3D objects.

Unfortunately, this known type of 3D printing pen has several drawbacks which have to be improved to satisfy to the needs of the market. More particularly, the structure of the 3D printing pen involves the use of a transport mechanism. The transport mechanism uses a gear train to change the axis of rotation of the gears over 90 degrees. This is a complex mechanism which increases the costs and which requires also a lot of space inside the housing. The 3D pen further has a feed tube between the transport mechanism and the nozzle. This structure makes it difficult for the user to position a new substrate in the feed tube and this creates often loading jams. Further, to avoid that the substrate becomes to warm and becomes soft before entering the nozzle, the tube is surrounded by the aluminium element and a fan is provided in the housing. This structure has the consequence that the size of the pen is large and therefore not convenient to use as a writing instrument. The inconvenience of use of the known 3D printing pens constitutes today a limiting factor for users to create aesthetic structures. As a result, in the art field, the use of the known printing pens is limited.

A further drawback of known 3D printing pens is that, although a fan is used inside the housing, the control of the temperature inside the housing and around the end of the housing is still critical since the melting of the substrate has to occur in the nozzle of the pen. A fan alone is not sufficient to fully guarantee this in the known 3D printing pen of CN103350507 and the device needs to use an aluminium element around the feed tube to prevent that the melt-substrate melts too early and thus inside the structure which can result in the formation of agglomerates. With the aluminium element surrounding the feed tube, the fan provides cool air towards the aluminium element which prevents the tube to heat during the extrusion step of the melt-substrate. This aluminium element however makes the structure of the 3D printing pen more complex and thus more costly. Furthermore is this element requiring space inside the housing which increases the overall size of the 3D printing pen. Furthermore, the above described structure makes the fan indispensable to provide cool air for the aluminium element which enables to maintain an adequate temperature.

Therefore, there is a need to provide a reliable 3D printing pen which can guarantee the extrusion of the melt-substrate at the exit of the nozzle. There is also a need to provide a 3D printing pen which is easy to use. There is a need for a 3D printing pen which has the look and feel of a real writing instrument while still reliable and easy to use. There is a need for a reliable, easy to use 3D printing pen which can deliver a melted-substrate with reproducibility.

It is an object of the invention to solve the aforementioned drawbacks by providing a 3D printing pen which is more practical, more convenient to use, like a classic writing instrument, and which is reliable over time.

To this end, the invention provides a 3D printing pen comprising a barrel open on a first end and comprising an opening for receiving a melt-substrate on a second end, opposite to the first end, a nozzle configured to receive and melt the melt-substrate and arranged to be connected to the first open end of the barrel, a channel inside the barrel comprising a first opening adjacent and aligned with the opening in the barrel for receiving the melt-substrate and a second opening, opposite to the first opening, adjacent to the nozzle, and a transport mechanism comprising a rotatable transport member which is, in use, in contact with the melt-substrate for moving the melt-substrate through towards the nozzle.

The 3D printing pen of the present invention comprises a channel which extends from adjacent the first end of the barrel to the second end of the barrel up to a position adjacent the nozzle opening. The channel and the rotatable transport member enable to move linearly the melt-substrate towards the nozzle by reducing the risk of a prior extrusion of the melt-substrate inside the barrel. Furthermore, transport jams of the melt-substrate in the channel are prevented since the user has just to introduce the melt-substrate in the second opening of the channel. In that way, the channel and the rotatable transport member enable to move the melt-substrate easily inside the 3D pen. The present invention provides a reliable 3D printing pen which guarantee that prior extrusion of the melt-substrate inside the pen and that transport jams are prevented. The melt-substrate is therefore moved linearly along the channel and reaches the nozzle where the melting of the melt-substrate occurs. When the substrate is melted, the melted substrate is extruded from the nozzle of the 3D printing pen in a reliable way allowing to create 3D objects with reproducibility.

Another advantage of the 3D printing pen according to the invention is that the internal structure of the 3D pen is such that it reduces the size significantly which enables to use the 3D printing pen of the present invention as a writing instrument with the look and feel of a classic writing instrument and a high degree of handiness which was not the case with the known 3D printing pens.

In other embodiments of the invention, the channel comprises a third opening, wherein said melt-substrate is between said rotatable transport member and an internal surface of said channel for supporting the rotatable transport when said rotatable transport member is rotated.

The channel comprises a third opening where the rotatable transport member is in contact with the melt-substrate when there is melt-substrate provided in the transport mechanism. Moreover, there is an inside surface of the channel, located opposite to the third opening, which acts as a supporting element for the melt-substrate. When the melt-substrate is introduced in the channel, the transport member is rotated and presses the melt-substrate against the inside surface of the channel which acts as a supporting element.

This is advantageous because in that way, the channel is providing a zone of contact at which the melt-substrate is in contact with the transport element and with the internal surface of the channel. As a result, the channel can guide the melt-substrate before the transport mechanism, at the transport mechanism and after the transport mechanism which avoids transport jams of the melt-substrate. Furthermore, by using the internal surface of the channel as counterpart for the transport member, a specific counterpart is avoided which saves cost and space.

In a particular embodiment, the pen is configured to receive the melt-substrate which is selected from the group consisting of ABS filament (ABS stands for Acrylonitrile butadiene styrene) and PLA filament (PLA stands for Polylactic acid, also called Polylactide).

In embodiments of the invention, the three-dimensional (3D) printing pen comprises a heat dissipating member for assembling the nozzle to the open first end of the barrel, wherein the heat dissipating member is positioning said nozzle at a distance from the barrel.

This is advantageous because the heat generated at the nozzle is dissipated for a large amount before it can reach the barrel. This avoids that a lot of heat from the nozzle is flowing to the barrel.

In embodiments of the invention, the heat dissipating member comprises holes, openings or perforations for dissipating heat when the nozzle is heated.

The advantage of these holes, openings or perforations is that heat will be dissipated faster.

In other embodiments of the invention, the 3D printing pen comprises a power input for receiving electrical energy from a power supply or from a USB port on an electrical device.

In other embodiments of the invention, the three-dimensional (3D) printing pen comprises at least two buttons configured to control the speed or movement direction of the melt-substrate inside the channel.

In further embodiments of the invention, a first button is configured to move the melt-substrate from the first end of the barrel to the second end of the barrel and a second button of the at least two buttons is configured to move the melt-substrate from the second end to the first end of the barrel.

In other embodiments of the invention, activating a first button is configured to move the melt-substrate with a first speed from the first end of the barrel to the second end of the barrel and activating a first and second button simultaneously is configured to move the melt-substrate from the second end to the first end of the barrel.

In still other embodiments of the invention, the 3D printing pen comprises at least two buttons wherein a first button is configured to move the melt-substrate from the first end of the barrel to the second end of the barrel at a first speed, wherein a second button is configured to move the melt-substrate from the first end of the barrel to the second end of the barrel at a second speed, and wherein pressing first and second button together is configured to move the melt-substrate in reverse direction, i.e. from the second end of the barrel towards the first end of the barrel.

The latter is advantageous because the need to press two buttons to move the melt-substrate in reverse direction avoids that the melt-substrate is moved in reverse direction unintentionally.

In other preferred embodiments of the invention, the 3D printing pen comprises a light source configured to indicate the moment at which the pen is ready to be used.

In a further embodiment of the present invention the three-dimensional (3D) printing pen comprises a barrel open on a first end and comprising an opening for receiving a melt-substrate on a second end, opposite to the first end, a nozzle configured to receive and melt the melt-substrate and arranged to be connected to the open first end of the barrel, a transport mechanism comprising a transport member for moving said melt-substrate towards the nozzle, and a heat dissipating member for assembling said nozzle to the open first end of the barrel, wherein the heat dissipating member is positioning the nozzle at a distance from the barrel.

This structure is advantageous because the heat generated by the nozzle is for a large amount dissipated in the area between the nozzle and the barrel such that only a small amount of heat from the nozzle is flowing to the barrel.

In other embodiments of the present invention, the heat dissipating member is made of a material having a thermal conductivity lower than 0.5 W/m.K.

The presence of the heat dissipating member enables to dissipate in first instance a large amount of the heat in the heat dissipating area, preferably located between the nozzle and the open end of the barrel. In second instance, the heat dissipating member absorbs also heat and isolates the heat generated for melting the melt-substrate towards the barrel in such a way that the adequate temperature is maintained around the open end of the barrel. In that way, the melting of the melt-substrate inside the barrel is prevented resulting in a reliable extrusion melt-substrate material out of the pen.

Advantageously, the structure with a heat dissipating member enables to save space inside the barrel and thus the pen, enabling to reduce considerably the size of the pen with respect with known pens. Especially, the use of a fan is in most embodiments not needed anymore at all or, if any fan is still needed, the size of the fan can at least be seriously reduced by the structure with a heat dissipating member. For example, a micro-fan could be used which has little to no impact to the overall size of the pen. The heat dissipating member is further made of a material having the aforementioned thermal properties which ensure the isolation towards the barrel.

In other embodiments of the present invention, the heat dissipating member can form a part of the nozzle or form an additional member extending to the first end of the barrel.

In further embodiments of the present invention, the heat dissipating member comprises holes, openings or perforations configured to dissipate the heat when the pen is used.

Providing the openings, holes or perforations is increasing the air flow in the heat dissipating member resulting in an increased heat dissipation. The combination of the structure of the heat dissipating member and the thermal properties achieved by the properties of the material (i.e. a low thermal conductivity) increases the efficiency of the heat dissipating member. The result is a 3D printing pen which dissipates, in first instance, heat very efficiently and isolates, in second instance, heat towards the barrel of the pen.

In further embodiments of the invention, the heat dissipating member is configured to surround the nozzle. This is advantageous because the heat dissipating member will act as an isolator around the nozzle resulting in low lost of energy when heating the nozzle.

In other embodiments of the invention, the heat dissipating member is positioning the nozzle at a distance from the open end of the barrel. The larger the distance between the nozzle and the barrel, the more heat is dissipated.

In particular embodiments of the invention, the 3D printing pen comprises a temperature microcontroller enabling to control the temperature at which the melt-substrate has to be melted.

In a further embodiment of the present invention, a 3D printing pen is provided comprising a barrel open on a first end and comprising an opening for receiving a melt-substrate on a second end, opposite to the first end, the direction from the first end to the second end of the barrel being the length direction of the pen, a nozzle configured to receive and melt the melt-substrate and arranged to be connected to the open first end of the barrel, a transport mechanism comprising a rotatable transport member which is, in use, in contact with the melt-substrate, wherein the rotatable transport member is rotating around an axis in the length direction of the pen for moving the melt-substrate in the length direction of the pen.

This is advantageous because, in that way, the rotatable transport member supports and moves the melt-substrate from the second end of the barrel towards the nozzle without the need for a complex transport mechanism.

In other embodiments of the invention, the pen comprises a channel inside said barrel comprising a first open end adjacent and aligned with said opening in the barrel for receiving said melt-substrate and a second open end, opposite to said first open end, adjacent to the nozzle, wherein said channel comprises an opening for receiving a portion of said rotatable transport member and wherein said melt-substrate is between said rotatable transport member and an internal surface of said channel for supporting transport of the melt-substrate when said rotatable transport member is rotated.

In further embodiments of the invention, the channel comprises an indentation at a position opposite to the third opening for receiving a portion of the rotatable transport member.

In still further embodiments of the invention, the rotatable transport member is a worm gear.

Other embodiments of the 3D printing pen according to the invention are mentioned in the annexed claims.

Other characteristics and advantages of the invention will appear more clearly in the light of the following description of a particular non-limiting embodiment of the invention, while referring to the figures.
Figure 1A is an illustration of a 3D printing pen according to an embodiment of the present invention.
Figure 1B is an exploded view of a 3D printing pen according to the embodiment of the invention of Figure 1A.
Figure 2 is an illustration of the internal structure of a preferred 3D printing pen according to an embodiment of the invention.
Figure 3 represents a view of a transport mechanism and a channel of a particular 3D printing pen of the present invention.
Figure 4a represents a preferred embodiment of a transport mechanism with a channel of a 3D printing pen of the present invention.
Figure 4b is a view of an advantageous channel of a 3D printing according to the present invention.
Figure 4c is another view of an advantageous channel of a 3D printing pen of the present invention.
Figure 5a is a view of a transport mechanism according to an embodiment the present invention.
Figure 5b is a view of the transport mechanism of Figure 5a.
Figure 6 is a perspective view of a transport mechanism according to an embodiment of the invention.

According to the present invention the three-dimensional (3D) printing pen comprises a barrel open on an first end and comprising an opening for receiving a melt-substrate on a second end, opposite to the first end, a nozzle configured to receive and melt said melt-substrate and arranged to be connected to the first open end of the barrel, a channel inside the barrel comprising a first opening adjacent and aligned with the opening in the barrel for receiving said melt-substrate and a second opening, opposite to said first opening, adjacent to the nozzle, and a transport mechanism comprising a rotatable transport member which is, in use, in contact with the melt-substrate for moving the melt-substrate through towards the nozzle. This constitutes an advantageous embodiment of the present invention. The different embodiments of the transport mechanism are disclosed herein after in order to understand the moving of the melt-substrate inside the barrel of the 3D pen.

Advantageously, the channel comprises a third opening for the rotatable transport member which can by rotation, when the pen is used, be in contact with the melt-substrate which is then pushed against an internal wall of the channel acting as a supporting element for the melt-substrate. This mechanical structure enables to move linearly the melt-substrate inside the channel toward the nozzle wherein the extrusion of the melt-substrate can occur. Some embodiments of the channel according to the present invention are described in the following figures.

In the present invention, the 3D pen can also comprise a heat dissipating member which can surround the nozzle, be a part of the nozzle or be an additional member extending to the first end of the barrel.

More precisely, the 3D printing pen of the present invention can have different internal and external structures.

For example, the 3D pen can comprise a barrel formed by at least one member, preferably at least 2 members, more preferably at least 4 members; and a nozzle. The barrel has a first opening, on which the nozzle is connected, and a second opening to receive the melt-substrate.

Advantageously, the barrel can comprise an additional member which comprises a first and second ends and two buttons to control the movement of the melt-substrate inside the channel. In that preferred configuration, the first end of the additional member is connected to the first open end of the barrel and the second end of the additional member is connected to an end of the nozzle.

More preferably, the heat dissipating member area is located between the nozzle where the extrusion of the melt-substrate is carried out and the first opening of the barrel. In the meaning of the present invention, the expression "first or second open end of the barrel" means the first or the second end of the barrel.

So, when the extrusion occurs, it is advantageous to manage the heat generated during the extrusion to prevent an overheating inside the 3D printing pen.

The nozzle of the 3D pen according to the present invention can comprise a heat dissipating member which enables to correctly manage the heat generated during the melting of the melt-substrate.

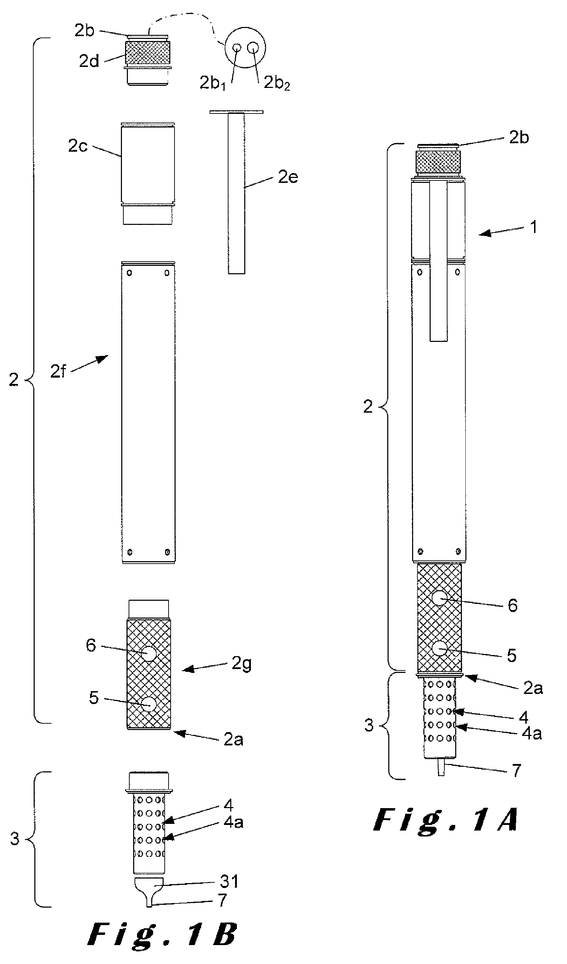

Fig. 1A illustrates a 3D printing pen 1 according to a preferred embodiment of the invention. The illustrated 3D pen 1 comprises a barrel 2 and a nozzle assembly 3. The barrel 2 comprises a first end 2a and a second end 2b. The first end 2a is open to be connected to the nozzle assembly 3. The second end 2b has an opening for receiving a melt-substrate (not illustrated). The barrel 2 further comprises an additional member 2g. In an alternative embodiment the additional member 2g is part of a body 2f of the barrel. The additional member 2g has a first end, a second end and two buttons 5, 6. The two buttons can be activated and de-activated to control the movement of the melt-substrate inside the pen. The first end of the additional member 2g is connected to the open first end 2a of the barrel 2. The second end of the additional member 2g is connected to the nozzle assembly 3.

The nozzle assembly 3 comprises a heat dissipating member 4 and a nozzle 31 with an output 7 for the melted melt-substrate. The heat dissipating member 4 is connected to the additional member 2g and comprises holes 4a all over its surface. The nozzle 31 is heated to provide extruded melt-substrate out of the output 7 of the pen 1. By moving the 3D pen 1 when the pen is activated (heated), 3D objects can be created, for example aesthetic 3D objects.

Figure 1B illustrates an exploded view of a 3D printing pen 1 of the present invention and illustrates each part constituting the preferred 3D pen 1 of the invention.

More precisely, the 3D pen 1 of figure 1B comprises a barrel 2 formed by four parts which are the body 2f, the additional member 2g, the additional part 2c and the end part 2d. Each of the aforementioned parts 2c, 2d, 2f and 2g of the barrel 2 comprises a first end and a second end. The connection of the four parts enables to form the structure of the barrel 2 which has a first end 2a located on one end of the additional member 2g and second end 2b located on one end of the end part 2d, the second end 2b having an opening for receiving a melt-substrate. The additional member 2g of the barrel 2 is connected to the nozzle assembly 3. As it can be seen from figure 1B, the additional part 2c comprises a supporting element 2e (a clip) to attach the pen to an object.

The end part 2d of the barrel 2 comprises two inputs (not illustrated): one for connecting to a power source such as an USB port of a laptop or other electrical device, or a power supply, and the other for receiving the melt-substrate.

The heat dissipating member 4 comprises a first part being in contact with one end 2a of the additional member 2g of the barrel 2 and a second part, opposite to the first part, being in contact with the nozzle and located at the end of the 3D pen 1 where the melted melt-substrate is delivered. The heat dissipating member 4 is made of a material having a low thermal conductivity, preferably lower than 0.5 W/m.K. Such a material can be a plastic ceramic composite like the product Accura® CeraMAX^{™} composite with a thermal conductivity of 0.47 W/m.K or a thermoplastic polymer such as Poly Ether Ketone (PEEK). Other material providing the same benefit are for example the commercially available "Clear Vue" material with a thermal conductivity of 0.21 W/m.K or "PMS-ABS" with a thermal conductivity of 0.19 W/m.K. The structure of the heat dissipating member 4 is made of holes which enable to dissipate sufficiently the heat generated to heat the nozzle while the extrusion of the melt-substrate is carried out. Beneficial is the structure as illustrated in the embodiment is that the nozzle 31 is at a distance from the barrel 2.

So, when the pen is used, the user holds the 3D pen 1 by means of the barrel 2 because the nozzle assembly 3 and especially the nozzle 31 is hot during extrusion.

In an alternative embodiment, the barrel 2 comprises not 4 parts but less or more parts. In an embodiment, the barrel 2 is made of one part.

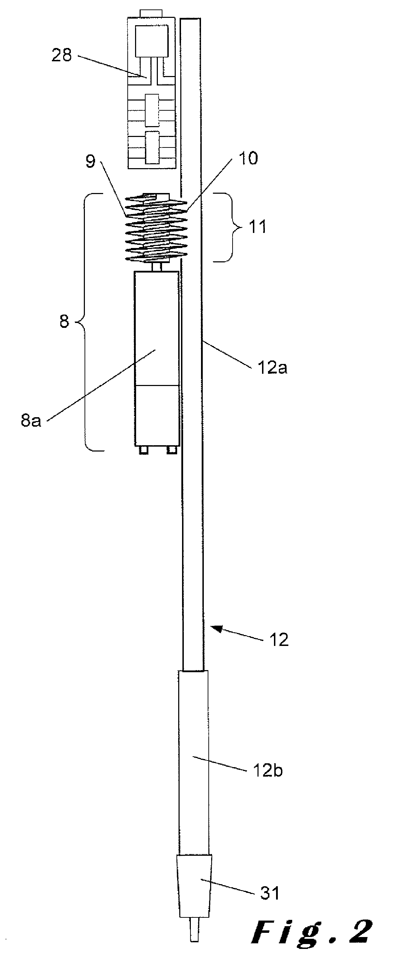

Figure 2 illustrates an internal structure of an advantageous 3D printing pen 1 according to an embodiment of the present invention. The 3D pen 1 comprises a channel 12 made of two parts 12a and 12b. In an alternative embodiment, channel 12 is made of one part. Channel 12 is connected to the nozzle 31 to guide the melt-substrate from the opening at the second end 2b of the barrel to the nozzle 31. The 3D pen 1 further comprises a transport mechanism 8. The transport mechanism 8 comprises a rotatable member 9 rotated by a motor 8a. In the embodiment of Figure 2, the 3D pen 1 further comprises a temperature microcontroller (M). In an alternative embodiment, the 3D pen 1 has no temperature controller.

The channel 12 is located inside the barrel 2 (not shown on Figure 2 for clarity) and comprises a first opening adjacent and aligned with the opening in the second end 2b of the barrel 2 for receiving the melt-substrate. The channel 12 comprises a second opening, opposite to said first opening, adjacent to the nozzle 31. The channel 12 comprises also a third opening 10 in the side wall of the channel 12 for receiving a portion of the rotatable transport member 9 and an internal wall 11, opposite to the third opening 10 of the channel 12, acts as a counterpart for the rotatable transport member such that in use melt-substrate is forwarded between the rotatable transport member 9 and the internal surface 11 when the transport member 9 is rotated. The channel 12 can partially or totally be made of a thermostable material such as Teflon. In embodiments where the channel 12 is made of two parts 12a and 12b, the channel can be made of two materials.

The transport mechanism 8 comprises a motor 8a, preferably a planetary motor, and a rotatable member 9 which is in the embodiment of Figure 2 a worm gear 9. The worm gear 9 is arranged to be, in use, in contact with the melt-substrate for moving it through towards the nozzle 31. Opposite to the third opening 10 of the channel 12, the internal wall 11 of the channel 12 is configured to support the melt-substrate when the pen is used. The Microcontroller 28 is configured to maintain the nozzle 31 at a predetermined temperature (for example, between 200 - 300 °C) for melting the melt-substrate. For ABS melt-substrate, the operation temperature of the nozzle is maintained at 230 °C. For PLA melt-substrate, the operation temperature is maintained at 210 °C.

The understanding of the function of a preferred 3D pen 1 of the present invention is facilitated by combining the teachings contained in the illustrations of the figures 1A and 2 and by explaining what happens when a user is writing on a surface with the 3D pen 1 of the invention.

For example, when a user wishes to use the 3D pen 1 of the present invention, he connects the 3D pen 1 to a power supply or to a USB port of a laptop and the melt-substrate is fed in the pen through the opening in the second end 2b of the barrel 2, such as an ABS filament. Because the channel 12 is adjacent the opening in the second end 2b of the barrel 2, the melt-substrate is easily placed inside the channel. When the 3D pen 1 is powered, the user can control the movement of the melt-substrate by pushing the buttons 5, 6 on the barrel 2 (see figure 1A, 1B). When one of the buttons 5 or 6 is pushed, the motor 8a of the transport mechanism 8 rotates the worm gear 9. The latter is sufficiently in contact with the melt-substrate, which is supported by the internal wall or surface 11 of the channel 12. The rotation of the worm gear 9 enables to move the melt-substrate inside the channel 12 towards the nozzle 31. When the melt-substrate reaches the nozzle 31, its extrusion can start. The nozzle 31 has at that moment the appropriate temperature (for example 200 °C) for melting the melt-substrate. The temperature of the nozzle 31 is controlled by the thermal Microcontroller 28. So, when the melt-substrate reaches the nozzle 31, a melted melt-substrate is provided outside of the pen 1, preferably through the output 7 of the nozzle 31. In that way, the user can create 3D objects.

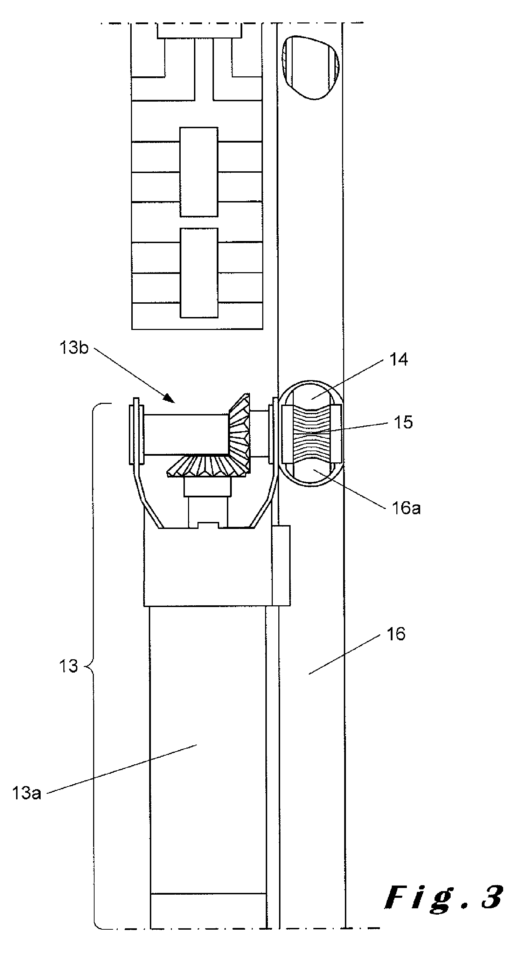

Figure 3 represents another preferred embodiment of the present invention and shows a transport mechanism 13 of a 3D printing pen 1 of the invention when a melt-substrate 14 is present in a channel 16. The transport mechanism 13 comprises a motor 13a and a rotatable transport member 15. The rotatable transport member 15 is in the embodiment of Figure 3 a concave external gear 15. The concave curve of the gear 15 is chosen for optimal transport of a round shape of the melt-substrate 14. The external gear is positioned on an axis on which is also a bevel gear. The bevel gear interacts with a second bevel gear on an axis of the motor 13a. When the motor 13a rotates, the second bevel gear rotates around the axis of the motor. The second bevel gear rotates the first bevel gear around an axis 90 degrees rotated with respect to the axis of the motor. The rotation of the first bevel gear rotates at the same time the external gear 15 which is on the same axis. The concave external gear 15 is in contact with the melt-substrate 14 such that rotation of the gear moves the melt substrate 14 in the channel 16. The channel 16 comprises a third opening 16a to receive a portion of the external gear 15. At the position of the third opening 16a, the melt substrate is located between the concave external gear and an internal wall (not illustrated in Figure 3) located opposite to the third opening 16a of the channel 16. When the motor 13a is powered on, the rotation of the gears 13b rotates the concave external gear 15 which, by rotation and by contacting the melt-substrate, moves the melt-substrate along the channel 16 towards the nozzle 31 (not visible on Figure 3).

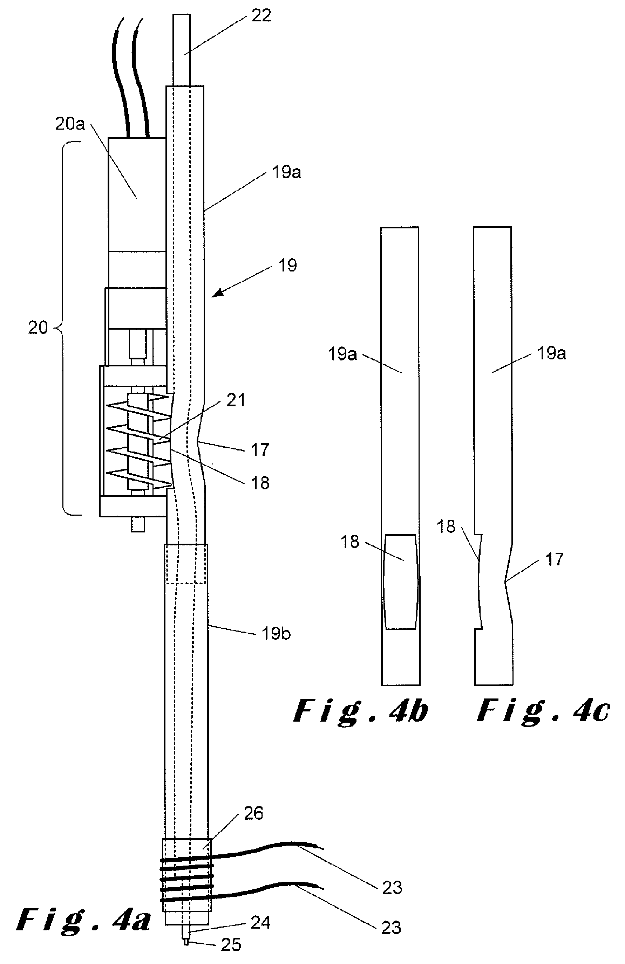

This preferred transport mechanism 13 can be integrated in any structure of a 3D printing pen 1 according to the present invention. For example, it can replace the transport mechanism 8 illustrated in the figures 2 and 4a.

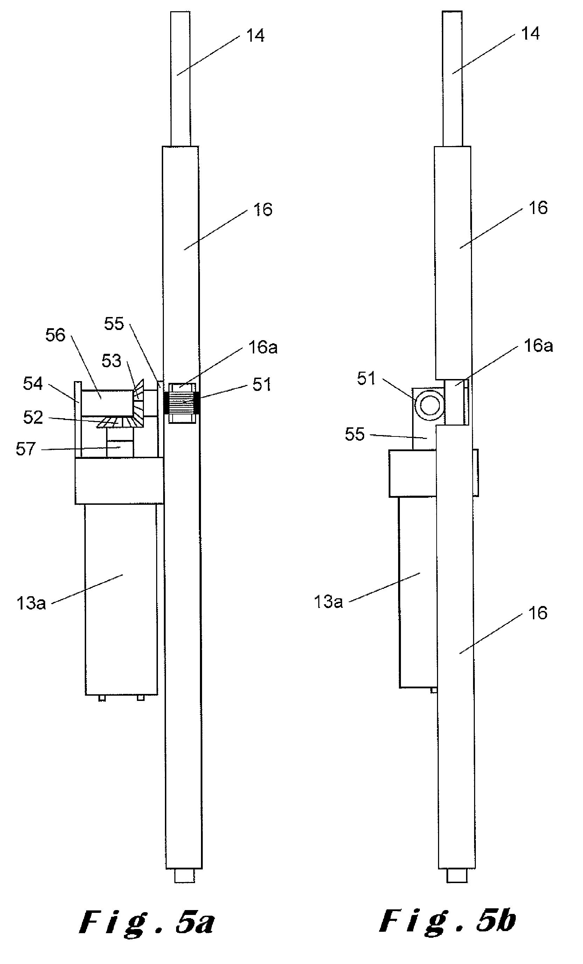

Referring to Figure 5a and 5b, an alternative transport mechanism of the one illustrated in Figure 3 is shown. The rotatable transport member 51 is in this alternative embodiment gear 51 which is not concave as in Figure 3 but straight, also called a spur gear. Similar as in the other embodiments, the motor 13a rotates bezel gear 52 which is mounted on axis 57 of the motor 13a. Bezel gear 52 interacts with bezel gear 53 which is mounted on an axis 56. Axis 56 is rotating in a support member 54, 55 which are fixed with respect to the motor or in a single support member or in two separate support members. The interaction of the bezel gears 52, 53 is positioned between the support members 54, 55. The axis 56 is elongated on the other side of the support member 55 to support the spur gear 51. The spur gear 51 is mounted fixed on this elongated part of the axis 56. The position of the spur gear 51 is such that when the spur gear 51 rotates, it moves the melt-substrate 14 in the channel 16 through opening 16a.

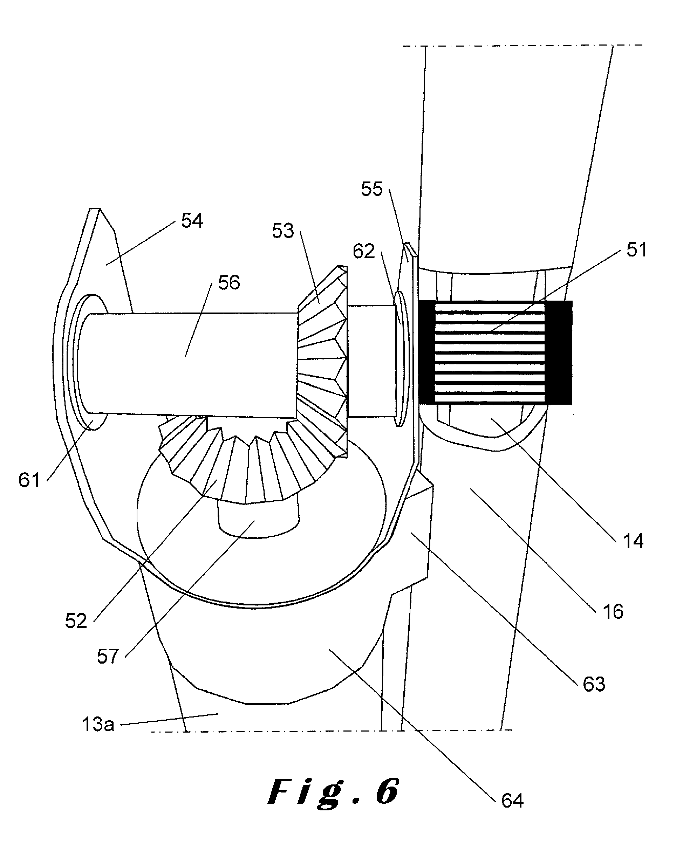

Referring to Figure 6, Figure 6 shows a perspective view of the transport mechanism of Figures 5a and 5b. Support member 54, 55 are part of axis holder 64 which is fitting on the housing of the motor 13a. The axis 56 for mounting bezel gear 53 and spur gear 51 is mounted with bearings 61 and 62 in holes of respectively support members 54 and 55. In an alternative embodiment, the support members 54, 55 have no bearings and the axis 56 is kept in position by two circlips. The embodiment shown in Figure 6, further illustrates a channel support 63 to ensure the relative positioning of the channel 16 with respect to the transport mechanism including motor 13a up to gear 51. This relative positioning is important to ensure a smooth transport of the melt-substrate 14 in the channel 16. The channel support 63 is in this embodiment an extending portion on the axis holder 64. The extending portion provides a surface to glue the channel 16 in the correct relative position with respect to the motor and gears. In alternative embodiments the channel support 63 can be structured differently. For example, the channel support 63 can be a snap member to click the channel 16 in position with respect to motor 13a and gears. In still another embodiment the channel support 63 is a separate member from the axis holder 64

Figure 4a represents a further embodiment of the invention and shows a channel 19, a nozzle 26, a heating wire 23, an output 24 for the melted melt-substrate and a transport mechanism 20. The transport mechanism 20 comprises a motor 20a and a rotatable transport member 21 in the form of a worm gear 21.

The channel 19 comprises a first part 19a having an indentation 17 and a third opening 18 located opposite to the indentation 17, and a second part 19b. The second part 19b guides the melt-substrate up to the nozzle 26. The nozzle 26 is heated by a heating wire 23. In an embodiment, the channel 19 is extending into the nozzle 26. In an alternative embodiment the channel 19 is adjacent an opening in the nozzle 26 for receiving the melt substrate 22. The first and second parts 19a and 19b of the channel 19 can be made of different kinds of materials such as plastic, ceramic, Teflon (PTFE) or isolator materials. The second part 19b is preferably made of an isolator material or Teflon. Moreover, the second part 19a of the channel is preferably made of a material which is different from the one of the first part 19a. In an alternative embodiment, the channel 19 is made of a single part.

In this particular embodiment, the channel 19 is extending from the second end 2b of the barrel 2 to the opening of the nozzle 26 for receiving the melt-substrate. More precisely, the first end 2a of the barrel 2 is preferably located at a distance from the nozzle 26 and the heating wire 23. The nozzle 26 may be part of a nozzle assembly comprising a heat dissipating member which surrounds partly or fully the nozzle 26 and the heating wire 23.

The heating wire 23 enables to heat the nozzle 26 up to a temperature situated around 200 °C. The length of the heating wire 23 is between 1 and 7 cm, preferably between 2 and 6 cm, more preferably between 3 and 5 cm. In an embodiment of the invention, the length of the wire determines the temperature up to which the nozzle 26 is heated.

The extrusion of melted melt-substrate 25 at the end of the output 24 has a diameter situated between 0.5 and 1 mm, preferably between 0.55 and 0.75 mm, more preferably 0.6 mm. The speed of the extrusion of melted melt-substrate is between 5 and 30 mm/sec, preferably between 15 and 25 mm/sec, more preferably 20 mm/sec.

The transport mechanism 20 comprises in an embodiment of the invention a planetary motor 20a which receives 40 mA at 3.0 V and has a frequency of rotation less than 90 rpm (revolution per minute), preferably less than 80 rpm, more preferably less than 75 rpm, advantageously less than 70 rpm. The transport mechanism 20 further comprises a worm gear 21) which is in contact with the melt-substrate 22. So, during use of the pen, the worm gear 21 is rotating around an axis in the length direction of the pen, which is in Figure 4 also the length direction of the channel 19, for moving the melt-substrate 22 in the length direction of the pen or the channel to provide the melt-substrate 22 towards and through the nozzle 26.

Figure 4b illustrates a further embodiment of the channel 19a of a 3D printing pen 1 according to the invention. The channel 19a comprises a third opening 18 for receiving a portion of a transport member 21 and an internal surface 17, opposite to the third opening 18 of the channel 19a. Trough the third opening 18, the transport member contacts the melt-substrate and the internal surface 17 functions as a counterpart, i.e. a supporting element, for the transport member 21 such that the melt-substrate is transported between the transport member 21 and the inner surface 17. So, when the melt-substrate 22 is entered in the channel 19a, it is located between the third opening 18 and the internal surface 17 of the channel 19a, which internal surface is located opposite to the third opening 18 of the channel 19a.

Figure 4c is an illustration of a preferred channel 19a of the 3D printing pen 1 of the present invention. The channel 19a comprises a third opening 18 and an indentation 17. So, when a substrate 22 is entered in the channel 19a, a part of the melt-substrate 22 is situated between the third opening 18 and the inner surface 17 of the indentation 17. So, when the 3D printing pen 1 comprises such as channel 19a, the transport member 21 has access through the third opening 18 of the channel 19a to be in contact with the melt-substrate 22. When a transport mechanism is powered inside the barrel of the 3D pen 1 of the present invention, the rotatable transport member 21 is in direct contact with the melt-substrate 22 and pushes it against the indentation 17 which supports it. In that way, the melt-substrate 22 can be moved linearly inside the channel 19a towards the nozzle 26 to be extruded.

The 3D printing pen 1 of the present invention can have different internal and external structures as illustrated in the Figures. However, it is also possible to provide other internal and external structures of the 3D pen 1 by combining the teachings present in each figure with the description of the present invention.

Although the preferred embodiments of the invention have been disclosed for illustrative purpose, those skilled in the art will appreciate that various modifications, additions or substitutions are possible, without departing from the scope and spirit of the invention as disclosed in the accompanying claims.

## Claims

1. A three-dimensional (3D) printing pen 1 comprising:
a barrel open on a first end and comprising an opening for receiving a melt-substrate on a second end, opposite to the first end,
a nozzle configured to receive and melt said melt-substrate and arranged to be connected to the first open end of the barrel,
a channel inside the barrel comprising a first opening adjacent and aligned with the opening in the barrel for receiving said melt-substrate and a second opening, opposite to said first opening, adjacent to the nozzle, and
a transport mechanism comprising a rotatable transport member which is, in use, in contact with the melt-substrate for moving the melt-substrate through towards the nozzle.

2. The three-dimensional (3D) printing pen 1 according to claim 1, wherein the channel comprises a third opening and wherein said melt-substrate is between said rotatable transport member and an internal surface of said channel for supporting the rotatable transport of said melt-substrate when said rotatable transport member is rotated.

3. The three-dimensional (3D) printing pen 1 according to any one of the preceding claims, further comprising a heat dissipating member for assembling said nozzle to the open first end of the barrel, wherein the heat dissipating member is positioning said nozzle at a distance from the barrel.

4. The three-dimensional (3D) printing pen according to claim 3, wherein the heat dissipating member comprises holes, openings or perforations for dissipating heat when the nozzle is heated.

5. The three-dimensional (3D) printing pen 1 according to any one of the preceding claims, further comprising at least two buttons configured to control the speed or movement direction of the melt-substrate inside the channel, wherein activating a first button is configured to move the melt-substrate with a first speed from the first end of the barrel to the second end of the barrel and wherein activating a first and second button simultaneously is configured to move the melt-substrate from the second end to the first end of the barrel.

6. The three-dimensional (3D) printing pen 1 according to any one of the preceding claims, further comprising a light source configured to indicate the moment at which the pen is ready to be used.

7. A three-dimensional (3D) printing pen 1 comprising:
a barrel open on an first end and comprising an opening for receiving a melt-substrate on a second end, opposite to the first end, ,
a nozzle configured to receive and melt said melt-substrate at the open first end of the barrel,
a transport mechanism comprising a transport member for moving said melt-substrate towards the nozzle, and
a heat dissipating member for assembling said nozzle to the open first end of the barrel, wherein the heat dissipating member is positioning said nozzle at a distance from the barrel.

8. A three-dimensional (3D) printing pen according to claim 7, wherein said heat dissipating member is made of a material having a thermal conductivity lower than 0.5 W/m.K.

9. The three-dimensional (3D) printing pen according to any one of claims 7 to 8, wherein the heat dissipating member comprises holes, openings or perforations for dissipating heat when the nozzle is heated.

10. The three-dimensional (3D) printing pen 1 according to any one of claims 7 to 9, wherein the heat dissipating member is configured to surround the nozzle.

11. The three-dimensional (3D) printing pen 1 according to any one of the claims 7 to 10, further comprising a temperature microcontroller, wherein the temperature microcontroller is configured to maintain the nozzle at a predetermined temperature for melting the melt-substrate.

12. A three-dimensional (3D) printing pen 1 comprising:
a barrel open on a first end and comprising an opening for receiving a melt-substrate on a second end, opposite to the first end, the direction from the first end to the second end of the barrel being the length direction of the pen,
a nozzle configured to receive and melt said melt-substrate and arranged to be connected to the open first end of the barrel,
a transport mechanism comprising a rotatable transport member which is, in use, in contact with the melt-substrate,
wherein the rotatable transport member is rotating around an axis in the length direction of the pen for moving the melt-substrate in the length direction of the pen.

13. The three-dimensional printing pen 1 according to claim 12, wherein the pen further comprises a channel inside said barrel comprising a first open end adjacent and aligned with said opening in the barrel for receiving said melt-substrate and a second open end, opposite to said first open end, adjacent to the nozzle, wherein said channel comprises a third opening for receiving a portion of said rotatable transport member and wherein said melt-substrate is between said rotatable transport member and an internal surface of said channel for supporting transport of the melt-substrate when said rotatable transport member is rotated.

14. The three-dimensional printing pen 1 according to claim 13, wherein said channel comprises an indentation at a position opposite to the third opening for receiving a portion of said rotatable transport member.

15. The three-dimensional printing pen 1 according to any one of claims 12 to 14, wherein said rotatable transport member is a worm gear.
